(19)

**Europäisches Patentamt**
**European Patent Office**
**Office européen des brevets**

(11) **EP 4 668 404 A1**

(12) **EUROPEAN PATENT APPLICATION**
published in accordance with Art. 153(4) EPC

(43) Date of publication:
 **24.12.2025 Bulletin 2025/52**

(21) Application number: **24908004.5**

(22) Date of filing: **17.12.2024**

(51) International Patent Classification (IPC):
 **H01M 10/058** (2010.01)  **H01M 10/0565** (2010.01)
 **H01M 10/0562** (2010.01)  **H01M 10/052** (2010.01)

(52) Cooperative Patent Classification (CPC):
 **H01M 10/052; H01M 10/0562; H01M 10/0565;**
 **H01M 10/058;** Y02E 60/10

(86) International application number:
 **PCT/KR2024/020471**

(87) International publication number:
 **WO 2025/135721 (26.06.2025 Gazette 2025/26)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **20.12.2023 KR 20230187350**
 **12.12.2024 KR 20240184498**

(71) Applicant: **LG Energy Solution, Ltd.**
 **Seoul 07335 (KR)**

(72) Inventors:
 • **JUN, Youngjin**
  **Daejeon 34122 (KR)**
 • **RYU, Jihoon**
  **Daejeon 34122 (KR)**
 • **LIM, Taeseob**
  **Daejeon 34122 (KR)**
 • **BYUN, Seoungwoo**
  **Daejeon 34122 (KR)**
 • **JANG, Eunji**
  **Daejeon 34122 (KR)**
 • **KIM, Dong Kyu**
  **Daejeon 34122 (KR)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **LITHIUM SECONDARY BATTERY WITH IMPROVED SAFETY**

(57) According to an embodiment of the present disclosure, there is provided a lithium secondary battery comprising:
a positive electrode in which a positive electrode mixture layer containing a positive electrode active material and an inorganic solid electrolyte is formed on one side or both sides of a positive electrode current collector,
a negative electrode in which a negative electrode mixture layer containing a negative electrode active material is formed on one side or both sides of a negative electrode current collector,
a separator interposed between the positive electrode and the negative electrode, and
a gel-type electrolyte,
wherein the inorganic solid electrolyte is included in an amount of 0.5 wt.% to 2 wt.% based on the total weight of the positive electrode mixture layer, and is uniformly distributed within the positive electrode mixture layer.

[FIG. 1]

Description

[TECHNICAL FIELD]

Cross-Reference to Related Application(s)

This application claims priority to and the benefit of Korean Patent Application No. 10-2023-0187350, filed on December 20, 2023 and Korean Patent Application No. 10-2024-0184498, filed on December 12, 2024, with the Korean Intellectual Property Office, the disclosures of which are incorporated herein by reference in their entirety.

The present disclosure relates to a lithium secondary battery with improved safety, and more particularly, to a lithium secondary battery which comprises not only an inorganic solid electrolyte in a positive electrode but also a gel-type electrolyte.

[BACKGROUND]

Recently, there has been a rising demand for high-capacity, high-output, and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

Generally, a lithium secondary battery include a positive electrode, a negative electrode, a separator interposed between the positive electrode and the negative electrode, an electrolyte, an organic solvent, and the like. The positive electrode can generate oxygen due to its unstable structure in a charged state, and there is a high risk of ignition when oxygen is generated, so research and development are being conducted on methods to improve the stability of lithium secondary batteries.

The separator is used to ensure electrical insulation between the positive electrode and the negative electrode, and a thin film made of polyolefin is generally used. However, in the case of polyolefin-based separators, they can easily shrink under a high-temperature environment, and fail to provide insulation between the positive electrode and the negative electrode. When electrical insulation between the positive electrode and the negative electrode becomes impossible, a short circuit occurs, which may act with oxygen generated by the unstable positive electrode and cause ignition. That is, if a short circuit occurs in a lithium secondary battery in a charged state under a high-temperature environment, there is a problem that the lithium secondary battery catches fire.

Thus, in order to ensure the safety of lithium secondary batteries which are enlarging a field of its application, all-solid-state batteries applied with solid electrolytes are being widely studied, however, it is known that they do not exhibit the same output, capacity, and lifetime performance as lithium ion batteries employing liquid electrolytes, and thus is mostly far behind the commercializing level.

Therefore, the biggest challenge in the industry is ultimately to realize a battery with improved safety that does not ignite even under at a considerably high temperature. However, in lithium ion batteries using liquid electrolytes, it is very difficult to prevent ignition due to volatilization of the liquid electrolyte and oxygen generation at the positive electrode at high temperatures. Therefore, research is actively being conducted to reduce the explosive power of the battery and ensure users have enough time to evacuate.

[DETAILED DESCRIPTION OF THE INVENTION]

[Technical Problem]

Therefore, it is an object of the present disclosure to provide a lithium secondary battery that can delay ignition of the secondary battery and reduce explosive power, thereby improving the safety of the secondary battery.

[Technical Solution]

According to an embodiment of the present disclosure, there is provided a lithium secondary battery comprising:

a positive electrode in which a positive electrode mixture layer containing a positive electrode active material and an inorganic solid electrolyte is formed on one side or both sides of a positive electrode current collector,
a negative electrode in which a negative electrode mixture layer containing a negative electrode active material is formed on one side or both sides of a negative electrode current collector,
a separator interposed between the positive electrode and the negative electrode, and
a gel-type electrolyte,

wherein the inorganic solid electrolyte is included in an amount of 0.5 wt.% to 2 wt.% based on the total weight of the positive electrode mixture layer, and is uniformly distributed within the positive electrode mixture layer.

Here, when the positive electrode mixture layer is divided in half based on the thickness direction, the inorganic solid electrolyte may be included in an amount of 40 to 60 wt.% in the upper layer and in an amount of 40 to 60 wt.% in the lower layer, based on the total weight of the inorganic solid electrolyte, and more specifically, when the upper layer and the lower layer are each divided in half based on the thickness direction, the inorganic solid electrolyte may be included in an amount of 20 to 30 wt.% in each layer based on the total weight of the inorganic solid electrolyte.

In addition, since the inorganic solid electrolyte is uniformly distributed on the whole, 50% to 90% of the total surface area of the positive electrode active material may be covered by the inorganic solid electrolyte.

In this case, the inorganic solid electrolyte may be an oxide-based solid electrolyte having a NASICON structure, and more specifically, it may be an oxide-based solid electrolyte represented by the following Chemical Formula 1.

[Chemical Formula 1] $\qquad Li_{1+x}M'_{2-x}M_x(PO_4)_3$

in Chemical Formula 1,

$$0<x<2,$$

M' is at least one selected from the group consisting of Ti, Zr, Ge, Sn, and Hf, and

M is at least one selected from the group consisting of Cr, Al, Mg, Ga, Sc, Y, In, and La.

More specifically, the oxide-based solid electrolyte may be a lithium aluminum titanium phosphate(LATP) compound in which M' is Ti, and M is Al.

The loading amount of the positive electrode mixture layer may be 400 mg/25 cm$^2$ to 600 mg/25 cm$^2$.

Meanwhile, the lithium secondary battery may include a gel-type electrolyte, and the gel-type electrolyte comprises,

i) a lithium salt, ii) a non-aqueous organic solvent, and
iii) at least one polymerizable compound selected from the group consisting of polymerizable monomers, oligomers, and copolymers having polymerizable unsaturated functional groups,
wherein at least a part of the polymerizable unsaturated functional groups may be cured.

In this case, the polymerizable unsaturated functional group may be at least one selected from the group consisting of a vinyl group, an epoxy group, an allyl group, and a (meth)acrylic group.

The non-aqueous organic solvent may be a carbonate-based organic solvent.

Furthermore, the gel-type electrolyte may further comprise a polymerization initiator, and the polymerization initiator may be a photoinitiator or a thermal initiator. The polymerization initiator may be included in an amount of 0.01 to 20 parts by weight based on 100 parts by weight of the polymerizable compound.

In addition, the gel-type electrolyte may further comprise a functional additive, and the functional additive may be at least one selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

**[BRIEF DESCRIPTION OF THE DRAWING]**

FIG. 1 is a SEM-EDS photograph of Experimental Example 1 according to Example 1.
FIG. 2 is a SEM-EDS photograph of Experimental Example 1 according to Comparative Example 3.
FIG. 3 is a graph showing the results of Experimental Example 2 according to Example 1.
FIG. 4 is a graph showing the results of Experimental Example 2 according to Example 2.
FIG. 5 is a graph showing the results of Experimental Example 2 according to Example 3.
FIG. 6 is a graph showing the results of Experimental Example 2 according to Comparative Example 1.
FIG. 7 is a graph showing the results of Experimental Example 2 according to Comparative Example 2.

FIG. 8 is a graph showing the results of Experimental Example 2 according to Comparative Example 3.
FIG. 9 is a capacity retention graph according to Experimental Example 3.

**[DETAILED DESCRIPTION OF THE EMBODIMENTS]**

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Throughout the descriptions herein, when a certain part "includes" a component, this does not indicate that the certain part excludes other components, but indicates that the part may further include other components, unless otherwise defined.

A lithium secondary battery according to an embodiment of the present disclosure comprises:

a positive electrode in which a positive electrode mixture layer containing a positive electrode active material and an inorganic solid electrolyte is formed on one side or both sides of a positive electrode current collector,
a negative electrode in which a negative electrode mixture layer containing a negative electrode active material is formed on one side or both sides of a negative electrode current collector,
a separator interposed between the positive electrode and the negative electrode, and
a gel-type electrolyte,
wherein the inorganic solid electrolyte is included in an amount of 0.5 wt.% to 2 wt.% based on the total weight of the positive electrode mixture layer, and is uniformly distributed within the positive electrode mixture layer.

**Positive electrode**

A positive electrode has a structure in which a positive electrode mixture layer containing a positive electrode active material and an inorganic solid electrolyte is formed on one side or both sides of a positive electrode current collector,

Here, the positive electrode mixture layer can be formed by applying a positive electrode slurry containing a positive electrode active material and an inorganic solid electrolyte to a positive electrode current collector, followed by drying, and rolling. At this time, the positive electrode slurry may further include electrode materials such as a conductive material and a binder in addition to the above materials.

The positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with carbon, nickel, titanium, silver, or the like may be used.

The positive electrode current collector may have a thickness of $3\mu m$ to $500\mu m$, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0 < Z < 2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where, $0<Y2<1$), $LiMn_{2-Z1}Co_{Z1}O_4$ (where $0 < Z1 < 2$), etc.), lithium-nickel-manganese-cobalt-based oxide (e.g., $Li(Ni_pCo_qMn_r)O_2$ (where, $0 < p < 1$, $0 < q < 1$, $0 < r < 1$, $p+q+r=1$) or $Li(Ni_{p1}Co_{q1}Mn_{r1})O_4$ (where, $0 < p1 < 2$, $0 < q1 < 2$, $0 < r1 < 2$, $p1+q1+r1=2$), etc.), or lithium-nickel-cobalt-transition metal(M) oxide (e.g., $Li(Ni_{p2}Co_{q2}Mn_{r2}M_{s2})O_2$ (where M is selected from the group consisting of Al, Fe, V, Cr, Ti, Ta, Mg and Mo, and p2, q2, r2 and s2 are atomic fractions of each independent elements, wherein $0 < p2 < 1$, $0 < q2 < 1$, $0 < r2 < 1$, $0 < s2 < 1$, p2+q2+r2+s2=1), etc.), lithium iron phosphate (e.g., $Li_{1+a}Fe_{1-x}M_x(PO_{4-b})X_b$ (where M is at least one selected from Al, Mg and Ti, X is at least one selected from F, S and N, and $-0.5 \leq a \leq 0.5$, $0 \leq x \leq 0.5$, $0 \leq b \leq 0.1$), and any one thereof or a compound of two or more thereof may be included.

Among these materials, in terms of the improvement of the capacity characteristics and stability of the battery, the lithium metal oxide may include $LiCoO_2$, $LiMnO_2$, $LiNiO_2$,, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ and $Li(Ni_{0.8}Mn_{0.1}Co_{0.1})O_2$, etc.), lithium nickel cobalt aluminum oxide (e.g., $Li(Ni_{0.8}Co_{0.15}Al_{0.05})O_2$, etc.), or lithium nickel manganese cobalt aluminum oxide (e.g., $Li(Ni_{0.86}Co_{0.05}Mn_{0.07}Al_{0.02})O_2$), lithium iron phosphate (e.g., $LiFePO_4$), etc., and a mixture of two or more thereof may be used.

The positive electrode active material may be included in an amount of 60 to 98 wt.%, preferably 80 to 98 wt.%, and more preferably 90 to 98 wt.%, based on the total weight of the positive electrode mixture layer.

The inorganic solid electrolyte may include at least one lithium metal oxide or lithium metal phosphate selected from NASICON-type solid electrolyte, LISICON-type solid electrolyte, Garnet-type solid electrolyte, Perovskite-type solid electrolyte, and LiPON-type solid electrolyte. More specific examples thereof may further include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

More specifically, the inorganic solid electrolyte may be a NASICON-type solid electrolyte among the above examples, and may be an oxide-based solid electrolyte having a NASICON-type structure, and more specifically, may be represented by the following Chemical Formula 1.

[Chemical Formula 1]     $Li_{1+x}M'_{2-x}M_x(PO_4)_3$

in Chemical Formula 1,

$$0 < x < 2,$$

M' is at least one selected from the group consisting of Ti, Zr, Ge, Sn, and Hf, and
M is at least one selected from the group consisting of Cr, Al, Mg, Ga, Sc, Y, In, and La.

Most specifically, the oxide-based solid electrolyte may be a lithium aluminum titanium phosphate(LATP) compound in which M' is Ti, and M is Al.

The inorganic solid electrolyte may be included in an amount of 0.5 wt.% to 2 wt.%, and more specifically, 0.5 wt.% to 1 wt.%, based on the total weight of the positive electrode mixture layer.

If the content is too low and outside the above range, it is difficult to obtain the explosive power reducing effect intended by the present disclosure, and if the content is too high, there is a problem that rather, the resistance of the lithium secondary battery increases, which is not preferable.

In addition, the inorganic solid electrolyte may be uniformly distributed within the positive electrode mixture layer.

Here, 'uniformly distributed' means that when the positive electrode mixture layer is divided into two or more layers based on the thickness direction, the difference in the content of the inorganic solid electrolyte included in the two or more layers does not exceed 20 wt.% when the total weight of the inorganic solid electrolyte is 100 wt.%.

In other words, this means that when the positive electrode mixture layer is divided into two based on the thickness direction, the content of the inorganic solid electrolyte included in each of the upper layer and the lower layer does not deviate from the ratio of 40:60 to 60:40 when the entire inorganic solid electrolyte is 100 wt.%.

Therefore, when the positive electrode mixture layer is divided in half based on the thickness direction, the inorganic solid electrolyte may be included in an amount of 40 to 60 wt.% in the upper layer and in an amount of 40 to 60 wt.% in the lower layer, based on the total weight of the inorganic solid electrolyte.

More specifically, when the upper layer and the lower layer are each divided in half based on the thickness direction, the inorganic solid electrolyte may be included in an amount of 20 to 30 wt.% in each layer based on the total weight of the inorganic solid electrolyte.

Here, the positive electrode mixture layer being divided in half based on the thickness direction does not mean that the positive electrode mixture layer is formed in two or more layers, but means that the positive electrode mixture layer formed for the analysis is divided into an upper layer/lower layer based on the thickness direction.

In addition, since the inorganic solid electrolyte is uniformly distributed in the positive electrode mixture layer in this way, the surface of the positive electrode active material can be covered by 50% or more, specifically 50% to 90%, more specifically 50% to 80%, and most specifically 60% to 80% of the total surface area of the positive electrode active material.

If the surface of the positive electrode active material is covered by less than 50% outside the above range, the safety intended by the present disclosure cannot be sufficiently ensure, which is not preferable.

Moreover, the average diameter(D50) of the inorganic solid electrolyte particles may be 50 nanometers to 10 micrometers, specifically 50 nanometers to 5 micrometers, and more specifically 50 nanometers to 1 micrometer.

If the average diameter is too small and outside the above range, aggregation between particles may occur due to a decrease in the dispersibility. Conversely, if the average diameter is too large, the pores are formed too large by the inorganic solid electrolyte, which is rather not preferable in terms of resistance. That is, when the average diameter satisfies the above range, the lithium ion conductivity can be increased to thereby reduce resistance and exhibiting improved secondary battery performance.

As used herein, the average diameter D50 means a particle diameter at which cumulative volumes of particles reach 50% in the particle size distribution curve of the particles. The D50 can be measured, for example, by using a laser diffraction method. The laser diffraction method can generally measure particle diameters ranging from a submicron range to several millimeters, and can obtain results with high reproducibility and high resolvability.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be contained in an amount of 0.1 to 20 wt.%, specifically 0.5 to 10 wt.%, and more specifically 0.5 to 5 wt.%, based on the total weight of the positive electrode mixture layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20wt.%, specifically 0.5 to 10 wt.%, and more specifically 0.5 to 5 wt.% based on the total weight of the positive electrode mixture layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

Meanwhile, the loading amount of the positive electrode mixture layer of the positive electrode may be 400 mg/25cm$^2$ to 600 mg/25cm$^2$, specifically 450 mg/25cm$^2$ to 600 mg/25cm$^2$, and more specifically, 450 mg/25cm$^2$ to 550 mg/25cm$^2$.

That is, in the case of the present disclosure, even if a high loading of the positive electrode is used, a high safety of the secondary battery can be ensured by the uniform distribution of the inorganic solid electrolyte.

**Negative electrode**

A negative electrode has a structure in which a negative electrode mixture layer is formed on one side or both sides of the negative electrode current collector.

Here, the negative electrode mixture layer can be formed by applying a negative electrode slurry containing a negative electrode active material to a negative electrode current collector, followed by drying and rolling, wherein the negative electrode slurry can further include electrode materials such as a conductive material and a binder as described above, in addition to the negative electrode active materials.

The negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, titanium, silver, or the like, an aluminum-cadmium alloy, or the like.

The negative electrode current collector may typically have a thickness of 3 to 500μm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material may include at least one selected from the group consisting of a lithium metal, a carbon material capable of reversibly intercalating/deintercalating lithium ions, metals or alloys of lithium and these metals, a metal composite oxide, a material capable of doping and de-doping lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a representative example thereof, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature fired carbon) or hard carbon, mesophase pitch carbide, fired cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $LixFe_2O_3$ (where $0 \leq x \leq 1$), $Li_xWO_2$ (where $0 \leq x \leq 1$) and $Sn_xMe_{1-x}Me'_yO_z$ (where Me: Mn, Fe, Pb, Ge; Me': Al, B, P, Si, Group 1, 2 and 3 elements of the periodic table, halogen; $0<x\leq1$; $1\leq y\leq3$; $1\leq z\leq8$) may be used.

The material which may be doped and undoped with lithium may include Si, $SiO_x$($0<x\leq2$), Si-Y alloy (where Y is an element selected from the group consisting of an alkali metal, an alkaline earth metal, a Group 13 element, a Group 14 element, a transition metal, a rare earth element, and a combination thereof, and is not Si), Sn, $SnO_2$, Sn-Y (where Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The negative electrode active material may be included in an amount of 60 to 99 wt.%, preferably 80 to 99 wt.%, and more preferably 90 to 98 wt.%, based on the total weight of the negative active material layer.

When the metal itself is used without forming a negative electrode mixture layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal joined/rolled/deposited on the metal thin film itself or the negative electrode current collector may include one type of metal selected from the group consisting of lithium(Li), nickel(Ni), tin(Sn), copper(Cu), and indium(In), or an alloy of two types thereof.

**Separator**

The seperator can be used without particular limitation as long as it is commonly used as a separator in a lithium secondary battery, and those having an excellent electrolyte liquid moisture-containing ability while having low resistance against ion migration of the electrolyte liquid are particularly preferred.

For example, as the separator, a porous polymer film containing a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a typical porous nonwoven fabric, for example, a nonwoven fabric made of a glass fiber having a high melting point, a polyethylene terephthalate fiber or the like can be used as the separator.

Alternatively, it may be an SRS (Safety Reinforced Separator) separator having a structure in which a coating layer containing inorganic particles and a binding material is formed on one side or both sides of the polymer substrate as described above.

The SRS separator is as described above. Specifically, the polyolefin substrate of the SRS separator is as described above, and the coating layer includes inorganic particles and a binding material.

Here, the inorganic particles enable empty spaces to form between inorganic particles and thus play role of a spacer that forms micropores and keeps a physical shape as well. Because the inorganic particles generally have a characteristic that does not change physical properties even at a temperature as high as 200°C or above, the formed organic/inorganic mixture layer has excellent thermal resistance.

The inorganic particles are not particularly limited as long as they are stable electrochemically. That is, the inorganic particles that can be used in the present disclosure is not particularly limited if an oxidization and/or a reduction reaction does not occur in an operating voltage range of a battery in use. In particular, when the inorganic particles having an ion transfer ability are used, it is possible to increase the ion conductivity and facilitate performance enhancement within the electrochemical device, and thus, the inorganic particles with higher ion conductivity are preferred. Further, when the inorganic particles have a high density, there is also the problem of weight increase of the secondary battery during manufacturing as well as difficulty in dispersing during manufacturing. Therefore, if possible, the inorganic particles with a lower density may be preferred. Further, the inorganic particles having a high dielectric constant may contribute to an increased dissociation of the electrolyte salt (e.g., lithium salt) within liquid electrolyte, thereby enhancing ion conductivity of the electrolyte. Finally, inorganic particles having thermal conductivity have excellent heat absorption ability, and thus, heat is locally concentrated to form heat generating points, thereby suppressing phenomena that lead to thermal runaway, which is more preferable.

For the foregoing reasons, the inorganic particles may be preferably at least one type selected from the group consisting of (a) inorganic particles of a high dielectric constant, of which the dielectric constant is 1 or more, 5 or more, preferably 10 or more, (b) inorganic particles having piezoelectricity, (c) thermally conductive inorganic particles and (d) inorganic particles having the ability to transport lithium ions.

The piezoelectric inorganic particles refer to a material which is nonconducting under a normal pressure, but exhibits electrically conducting property due to changes of internal structure when a certain pressure is applied thereto. It is a material that has not only a high dielectric constant characteristic such as a dielectric constant of 100 or more, but also a function of generating electric potential difference between both surfaces when one surface is charged positive and the opposite surface is charged negative with charges generated when the piezoelectric material is tensioned or compressed by a certain pressure exerted thereto.

Examples of the inorganic particles having piezoelectricity may include $BaTiO_3$, $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT) hafnia ($H_fO_2$) or a mixture thereof, but not limited hereto.

The "inorganic particles having the ability to transport lithium ions" refer to inorganic particles that contain lithium atoms, but have an ability to move lithium ions without storing lithium. Because the inorganic particles having the ability to transport lithium ions can transfer and migrate lithium ions because of a kind of defect present within the particle structure, it is possible to prevent a decrease in lithium mobility and thus prevent a decrease in battery capacity.

Examples of the inorganic particles having the ability to transport lithium ions may be lithium phosphate($Li_3PO_4$), lithium titanium phosphate($Li_xTi_y(PO_4)_3$, 0<x<2, 0<y<3), lithium aluminum titanium phosphate($Li_xAl_yTi_z(PO_4)_3$, 0<x<2, 0<y<1, 0<z<3), (LiAlTiP)$_xO_y$-based glass(0<x<4, 0<y<13) such as $14Li_2O$-$9Al_2O_3$-$38TiO_2$-$39P_2O_5$, lithium lanthanum titanate ($Li_xLa_yTiO_3$, 0<x<2, 0<y<3), lithium germanium thiophosphate($Li_xGe_yP_zS_w$, 0<x<4, 0<y<1, 0<z<1, 0<w<5) such as $Li_{3.25}Ge_{0.25}P_{0.75}S_4$, lithium nitride ($Li_xN_y$, 0<x<4, 0<y<2) such as $Li_3N$, $SiS_2$-based glass ($Li_xSi_yS_z$, 0<x<3, 0<y<2, 0<z<4) such as $Li_3PO_4$-$Li_2S$-$SiS_2$, $P_2S_5$-based glass($Li_xP_yS_z$, 0<x<3, 0<y<3, 0<z<7) such as $LiI$-$Li_2S$-$P_2S_5$, or a mixture thereof, but not limited hereto.

Further, examples of the inorganic particles having a dielectric constant of 1 or more may be $SrTiO_3$, $SnO_2$, $CeO_2$, $MgO$, $NiO$, $CaO$, $ZnO$, $ZrO_2$, $Y_2O_3$, $Al_2O_3$, $TiO_2$, $SiC$ or a mixture thereof, but not limited hereto.

The thermally conductive inorganic particles are materials that provides low thermal resistance but does not provide electrical conductivity and thus has insulating properties, and an example thereof may be at least one selected from the group consisting of aluminum nitride(AlN), boron nitride(BN), alumina($Al_2O_3$), silicon carbide(SiC), and beryllium oxide(BeO), but not limited thereto.

When the above-mentioned high-dielectric constant inorganic particles, inorganic particles having piezoelectricity, thermally conductive inorganic particles, and inorganic particles having the ability to transport lithium ions are used in combination, synergistic effects of these can be doubled.

The size of the inorganic particle is not limited, but to ensure appropriate porosity between the inorganic particles, the preferable size is within the range of 0.001 to 10 $\mu$m if possible. When the size is less than 0.001 $\mu$m, dispersion is deteriorated, and physical properties are difficult to adjust. When the size is greater than 10 $\mu$m, a thickness increases, and mechanical property is deteriorated. Further, because of an excessively large pore size, the role of a coating layer is not sufficiently performed, and possibility in which internal short circuit occurs at charging and discharging of the battery is increased.

The content of the inorganic particles is not particularly limited, but is preferably in the range of 1 to 99 wt.%, especially 10 to 95 wt.%, based on 100 wt.% of the mixture of the inorganic particles and the binding material. If the content of the inorganic particles is less than 1 wt.%, the content of the binding material may be too high so that the pore size and porosity are reduced due to a decrease in the empty space formed between inorganic particles, thereby reducing the mobility of lithium ions. On the other hand, when the content exceeds 99 wt.%, the content of the binding material is too small, so the adhesive force between inorganic materials becomes weak and thus the mechanical properties of the coating layer are deteriorated.

Meanwhile, the binding material is not limited as long as it does not cause a side reaction with the electrolyte solution, but in particular, a binding material with a glass transition temperature(Tg) as low as possible can be used, and the temperature is preferably in the range of -200 to 200°C. This is because the mechanical properties of the final insulating film can be improved.

Further, the binding material does not necessarily have to have ion conduction ability, but it is more preferable to use a polymer having ion conduction ability.

Therefore, the binding material preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer may be 1 or more, specifically in the range of 1.0 to 100 (measurement frequency = 1 kHz), and particularly preferably 10 or more.

In addition to the foregoing functions, the binding material may have characteristic which can exhibit a high electrode impregnation (degree of swelling) by gelation when being impregnated into the liquid electrolyte. When the binding material has practically excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 $MPa^{1/2}$ is preferred, and the ranges of 15 to 25 $MPa^{1/2}$ and 30 to 45 $MPa^{1/2}$ are more preferred. When the solubility parameter is less than 15 $MPa^{1/2}$ and more than 45 $MPa^{1/2}$, it becomes difficult to be impregnated (swelled) by a typical liquid electrolyte for batteries.

Examples of the binding material include at least one selected from the group consisting of polyvinylidene fluorideco-hexafluoropropylene, polyvinylidene fluoride-cotrichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The total thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve lifetime characteristics.

**Gel-type electrolyte**

The gel-type electrolyte comprises,

i) a lithium salt, ii) a non-aqueous organic solvent, and
iii) at least one polymerizable compound selected from the group consisting of polymerizable monomers, oligomers, and copolymers having polymerizable unsaturated functional groups,
wherein at least a part of the polymerizable unsaturated functional groups may be cured.

Here, the lithium salt is used as a medium for transferring ions within a lithium secondary battery. For example, the lithium salt may include $Li^+$ as a cation, and may include at least one selected from the group consisting of $F^-$, $Cl^-$, $Br^-$, $I^-$, $NO3^-$, $N(CN)2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl) imide, $LiN(SO_2F)_2$), LiBETI(lithium bis(perfluoroethanesulfonyl) imide, $LiN(SO_2CF_2CF_3)_2$ and LiTFSI (lithium bis(trifluoromethanesulfonyl) imide, $LiN(SO_2CF_3)_2$) or a mixture of two or more, but in terms of excellent stability, it is preferable to include $Li(N(SO_2CF_3)_2$.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like in the voltage range of the charge/discharge process of the lithium secondary battery, and may exhibit desired characteristics together with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate (PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of $\gamma$-butyrolactone, $\gamma$-valerolactone, $\gamma$-caprolactone, $\sigma$-valerolactone, and $\varepsilon$-caprolactone, or a mixture of two or more thereof, but are not limited thereto.

Among the ester-based solvents, since the cyclic carbonate-based compound is well dissociate the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, a gel-type electrolyte having high electrical conductivity may be prepared, which may be more preferably used.

Meanwhile, the polymerizable compound of the polymerizable monomer, oligomer or copolymer is a material having a polymerizable unsaturated functional group, for example, a compound which has a polymerizable unsaturated functional group selected from the group consisting of vinyl, epoxy, allyl and (meth)acrylic groups, and can be converted into a gel type through polymerization or crosslinking. The polymerizable compound is not particularly limited, as long as it is used conventionally as a polymerizable monomer, oligomer or copolymer for preparing a gel-type polymer electrolyte.

More specifically, non-limiting examples of the polymerizable monomer or oligomer include tetraethylene glycoldiacrylate, polyethylene glycol diacrylate (molecular weight 50~20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxy octane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in mixture of two or more thereof.

In addition, representative examples of the copolymer include at least one copolymer selected from the group consisting of allyl 1,1,2,2-tetrafluoroethyl ether (TFE)-(2,2,2-trifluoroethyl acrylate) polymer, TFE-vinyl acetate, TFE-(2-vinyl-1,3-dioxolane) polymer, TFE-vinyl methacrylate polymer, TFE-acrylonitrile polymer, TFE-vinyl acrylate polymer, TFE-co-methyl acrylate polymer, TFE-methyl methacrylate(MMA) polymer and TFE-2,2,2-trifluoroethyl acrylate(FA) polymer.

The polymer formed through the curing of the above materials may be included in an amount of 0.01 wt.% to 10 wt.% based on the total weight of the gel-type electrolyte. When the content of the polymer is more than 10 wt.%, the amount of the polymerizable material increases during the preparation of the gel-type electrolyte, so that gelation occurs too quickly or is formed too densely, resulting in a disadvantage in that a gel with high resistance is obtained. On the contrary, when the content is less than 0.01 wt.%, the effect of gelation cannot be obtained, which is not preferable.

Meanwhile, the gel-type electrolyte of the present disclosure may further include a polymerization initiator for polymerization of the polymerizable unsaturated functional group, and a conventional thermal polymerization initiator or photopolymerization initiator known in the art may be used. For example, the initiator may be decomposed by heat to form radicals, and react with the polymerizable monomer, oligomer, or polymer through free radical polymerization to form a gel-type electrolyte.

More particularly, examples of the polymerization initiator include organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azo-

bis(2-cyanobutane), 2,2'-azobis(methylbutyronitrile), 2,2'-azobis(iso-butyronitrile) (AIBN) and 2,2'-azobisdimethyl valeronitrile (AMVN), or the like, but are not limited thereto.

The polymerization initiator is decomposed by heat including by way of non-limiting example, heat of 30°C to 100°C, or decomposed at room temperature (5°C to 30°C) to form radicals in a lithium secondary battery, and the polymerizable unsaturated functional group of a polymerizable monomer, oligomer, or polymer can react by free radical polymerization to form a gel-type electrolyte.

The polymerization initiator may be included in an amount of 0.01 to 20 parts by weight, particularly 0.01 to 1 parts by weight, based on 100 parts by weight of the polymerizable compound.

When the polymerization initiator is included within a range of 0.01 to 20 parts by weight, it is possible to increase the gel conversion rate so that gel-type electrolyte properties may be ensured, and to prevent a pre-gelation reaction so that the wettability of an electrode with an electrolyte may be improved.

Moreover, the gel-type electrolyte may further include a functional additive, and the functional additive may be included to prevent the negative electrode from decomposing in a high power environment and causing negative electrode collapse, or to further improve the low temperature high rate discharge characteristics, high temperature stability, overcharge prevention, battery expansion suppression effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and specifically 1 wt.% to 5 wt.% based on the total weight of the gel-type electrolyte. In a case in which the amount of the sultone-based compound in the gel-type electrolyte is greater than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the gel-type electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the gel-type electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the gel-type electrolyte.

Further, the halogen-substituted carbonate-based compound may include fluoroethylene carbonate(FEC), and may be included in an amount of 5 wt.% or less based on the total weight of the gel-type electrolyte. In a case in which the amount of the halogen-substituted carbonate-based compound in the gel-type electrolyte is greater than 5 wt.%, the cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the gel-type electrolyte. If the content of the cyclic carbonate-based compound in the gel-type electrolyte is greater than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the gel-type electrolyte.

The borate-based compound may include lithium oxalyldifluoroborate, and may be included in an amount of 3 wt.% or less based on the total weight of the gel-type electrolyte.

The lithium salt-based compound is a compound different from the lithium salt included in the gel-type electrolyte. The lithium salt-based compound may include at least one compound selected from the group consisting of $LiPO_2F_2$,

LiODFB, LiBOB (lithium bisoxalate borate(LiB$(C_2O_4)_2$)), and LiBF$_4$, and may be included in an amount of 3 wt.% or less based on the total weight of the gel-type electrolyte.

Two or more kinds of the functional additives may be mixed, and included in an amount of 20 wt.% or less, specifically 0.1 wt.% to 10 wt.%, based on the total weight of the gel-type electrolyte. If the content of the functional additive is greater than 20 wt.%, there is a possibility that excessive side reactions in the gel-type electrolyte may occur during charge and discharge of the battery. In particular, it is not sufficiently decomposed at high temperatures, and may exist as an unreacted material or in a precipitated state in a gel-type electrolyte at room temperature. Thereby, side reactions may occur in which the lifetime or resistance characteristics of the lithium secondary battery are reduced.

Hereinafter, the lithium secondary battery according to an embodiment of the present disclosure will be described with reference to Examples in order to demonstrate that it exhibits improved effects.

<Example 1>

**Preparation of positive electrode**

A 15 micrometer thick aluminum(Al) metal film was prepared as a positive electrode current collector. Li(Ni$_{0.8}$Mn$_{0.1}$Co$_{0.1}$)O$_2$ as a positive electrode active material, Li$_{1.4}$Al$_{0.4}$Ti$_{1.6}$(PO$_4$)$_3$(LATP) as an inorganic solid electrolyte, carbon nanotubes as a conductive material, and PVDF as a binder were added in a weight ratio of 95:1:1:3 in an NMP solvent and dispersed to prepare a positive electrode slurry. The positive electrode slurry was coated on one side of the aluminum metal film to a thickness of 60 micrometers, followed by drying and rolling to prepare a positive electrode (loading amount: 450 mg/25 cm$^2$).

**Preparation of negative electrode**

Next, a 20 micrometer thick copper(Cu) metal film was prepared as a negative electrode current collector. Graphite as a negative electrode active material, carbon black as a conductive material, carboxymethyl cellulose(CMC) as a thickener, and styrene-butadiene rubber(SBR) as a binder were added in a weight ratio of 95:1:1.5:2.5 in water and dispersed to prepare a negative electrode slurry. The negative electrode slurry was coated on one side of the copper metal film to a thickness of 75 micrometers, followed by drying and rolling to prepare a negative electrode.

**Preparation of electrode assembly**

A polyolefin separator (thickness: 15 micrometers) was interposed between the positive electrode and the negative electrode to prepare an electrode assembly.

**Manufacturing of lithium secondary battery**

LiPF$_6$ was dissolved to a concentration of 1.0M in a non-aqueous organic solvent having a composition of ethylene carbonate (EC) : ethyl methyl carbonate (EMC) = 30 : 70 (volume ratio). Trimethylolpropane triacrylate as a polymerizable compound was added in an amount of 4 wt.% based on the total weight, and azobisisobutyronitrile (AIBN, V59) as a polymerization initiator was added in an amount of 0.02 wt.% based on 100 wt.% of the polymerizable compound, thereby preparing a gel polymer electrolyte composition.

The electrode assembly prepared above was inserted into a battery case, and the gel polymer electrolyte composition prepared above was injected to manufacture a secondary battery. Then, after the battery case was wetted with the electrolyte at room temperature for 2 days, the gel polymer electrolyte composition was left and polymerized in a chamber at 60°C for 5 hours to manufacture a lithium secondary battery.

<Example 2>

A lithium secondary battery was manufactured in the same manner as in Example 1, except that in the gel polymer electrolyte composition of Example 1, the polymerizable compound was added to be 10 wt.% of the total weight.

<Example 3>

A lithium secondary battery was manufactured in the same manner as in Example 1, except that in the positive electrode of Example 1, Li(Ni$_{0.8}$Mn$_{0.1}$Co$_{0.1}$)O$_2$ as a positive electrode active material; Li$_{1.4}$Al$_{0.4}$Ti$_{1.6}$(PO$_4$)$_3$(LATP) as an inorganic solid electrolyte; carbon nanotubes as a conductive material; and PVDF as a binder were added in a weight ratio of 94:2:1:3.

<Comparative Example 1>

A lithium secondary battery was manufactured in the same manner as in Example 1, except that in the positive electrode of Example 1, $Li(Ni_{0.8}Mn_{0.1}Co_{0.1})O_2$ as a positive electrode active material, carbon nanotube as a conductive material, and PVDF as a binder were mixed in a weight ratio of 96:1:3, and a liquid electrolyte solution, in which $LiPF_6$ was dissolved in a non-aqueous organic solvent having a composition of ethylene carbonate (EC) : ethyl methyl carbonate (EMC) = 30:70 (volume ratio) at a concentration of 1.0 M, was injected instead of the gel polymer electrolyte composition, and only the impregnation process was performed.

<Comparative Example 2>

A lithium secondary battery was manufactured in the same manner as in Example 1, except that a liquid electrolyte solution, in which $LiPF_6$ was dissolved to a concentration of 1.0M in a non-aqueous organic solvent having a composition of ethylene carbonate (EC) : ethyl methyl carbonate (EMC) = 30 : 70 (volume ratio), was injected instead of the gel polymer electrolyte composition of Example 1, and only the impregnation process was performed.

<Comparative Example 3>

A lithium secondary battery was manufactured in the same manner as in Example 1, except that in the positive electrode of Example 1, $Li(Ni_{0.8}Mn_{0.1}Co_{0.1})O_2$ as a positive electrode active material, carbon nanotubes as a conductive material, and PVDF as a binder were added in a weight ratio of 96 : 1 : 3.

<Comparative Example 4>

A lithium secondary battery was manufactured in the same manner as in Example 1, except that in the positive electrode of Example 1, $Li(Ni_{0.8}Mn_{0.1}Co_{0.1})O_2$ as a positive electrode active material: $Li_{1.4}Al_{0.4}Ti_{1.6}(PO_4)_3$(LATP) as an inorganic solid electrolyte: carbon nanotubes as a conductive material: PVDF as a binder were added in a weight ratio of 93:3:1:3.

<Experimental Example 1>

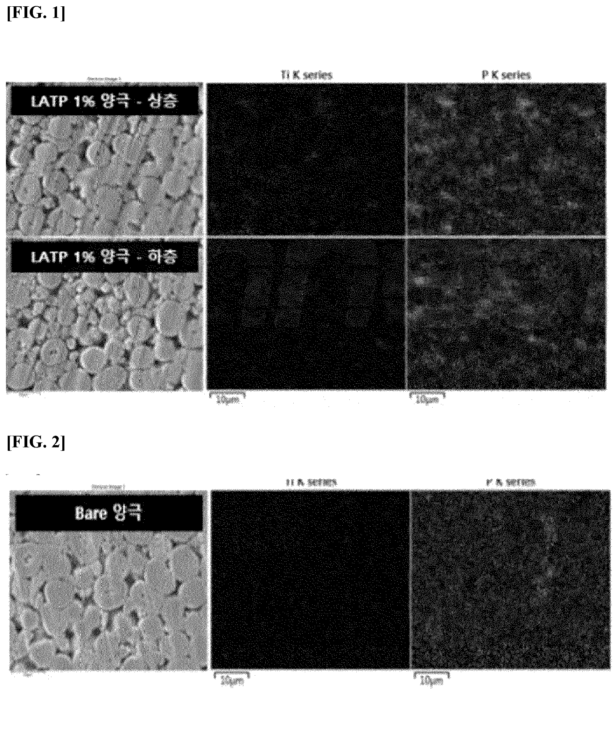

The positive electrodes prepared in Example 1, and Comparative Example 3 were cut in the thickness direction through the center, and the SEM photograph of the cross section was taken, and EDS analysis was performed.
At this time, the analysis was performed separately for the upper and lower layers in the thickness direction, and the results are shown in FIGS. 1 and 2 and Table 1 below.

[Table 1]

|  | Example 1 |  | Comparative Example 3 |
|---|---|---|---|
|  | Upper layer (wt.%) | Lower layer (wt.%) | Bare |
| C | 6.93 | 7.28 | 8.05 |
| O | 28.21 | 29.27 | 31.78 |
| F | 2.11 | 2.2 | 2.27 |
| Al | 0.64 | 0.67 | 0.61 |
| P | 0.48 | 0.45 | 0.07 |
| Ti | 0.4 | 0.35 | 0 |
| Mn | 4.82 | 4.72 | 4.45 |
| Co | 3.21 | 3.13 | 3.06 |
| Ni | 52.59 | 51.92 | 49.72 |
| Total | 100 | 100 | 100 |

Referring to FIGS 1 to 2 below and Table 1 above, it can be confirmed that the inorganic solid electrolyte is distributed in very similar contents in both the upper layer and the lower layer of the positive electrode mixture layer according to the present disclosure.

<Experimental Example 2>

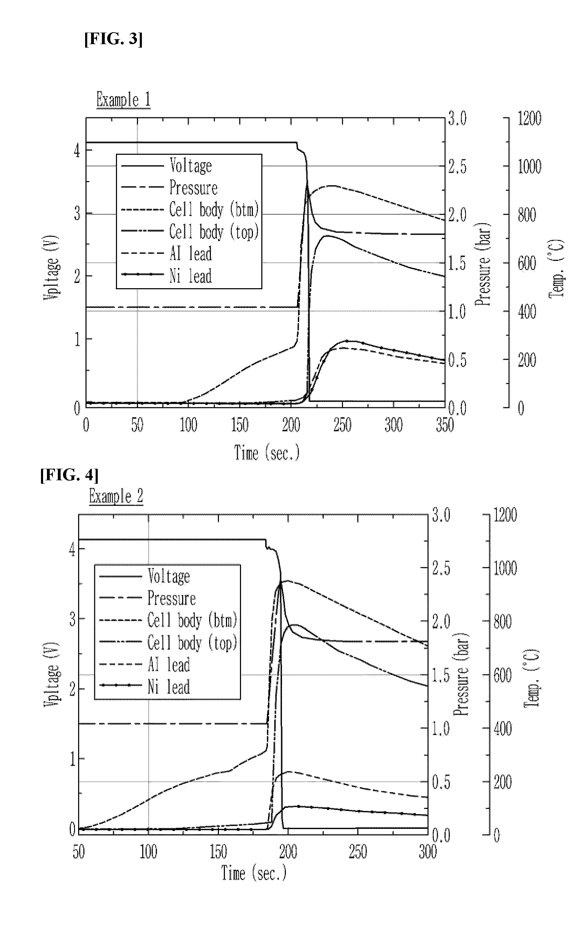

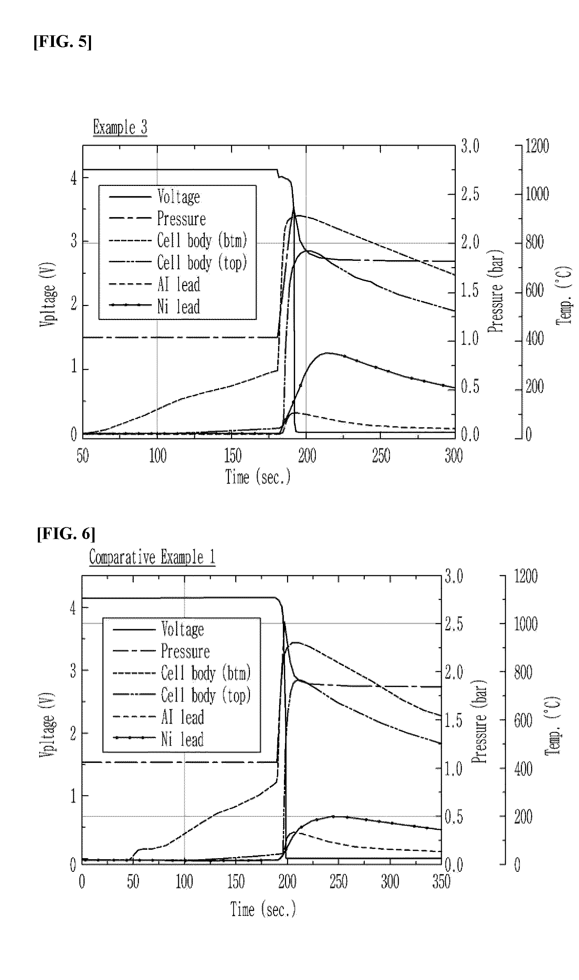

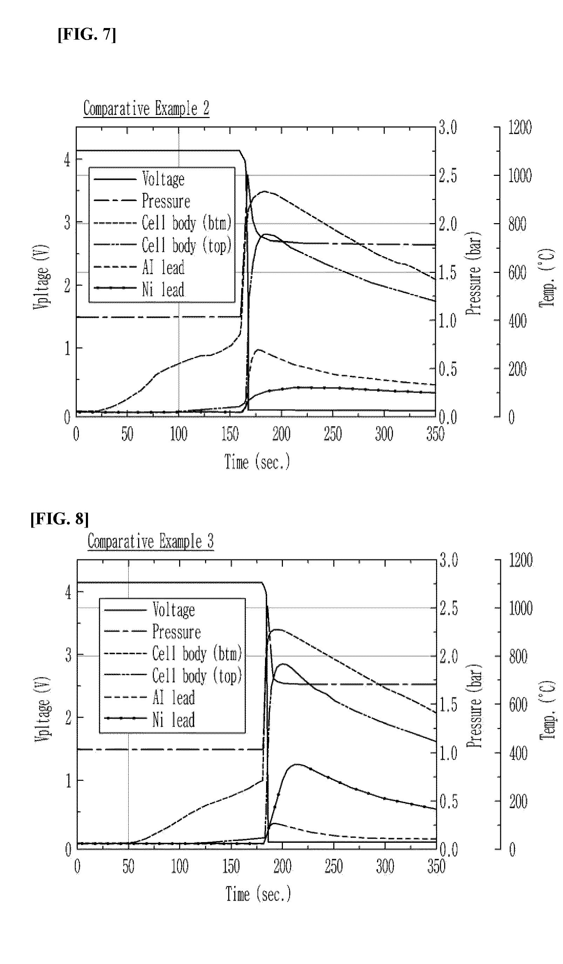

The lithium secondary batteries of Examples 1 to 3 and Comparative Examples 1 to 3 were fully charged with a constant current of 0.33C at 25°C until voltage reached 4.2 V, a heating pad made of mica was attached to such lithium secondary batteries, the temperature was raised at 300W/min for 1 minute, and then 300 W was maintained to create an external ignition environment. While maintaining such conditions, the voltage, pressure, and temperature of the lithium secondary batteries were measured over time, and the results are shown in FIGS. 3 to 8 below.

The difference between the maximum pressure measured at the time of explosion of the lithium secondary batteries and the normal pressure set at an initial stage was defined as the explosion pressure, and the time from the point when the pressure began to change to the maximum pressure was defined as the reaction time.

The relatively smaller the explosion pressure and then longer the reaction time mean the lower the explosion power of the lithium secondary battery. The results are shown in Table 2 below.

[Table 2]

|  | Example 1 | Example 2 | Example 3 | Comparative Example 1 | Comparative Example 2 | Comparative Example 3 |
|---|---|---|---|---|---|---|
| Explosion pressure (bar) | 1.29 | 1.35 | 1.31 | 1.46 | 1.47 | 1.48 |
| Reaction time (sec) | 10.1 | 10.3 | 10.1 | 8.3 | 7.5 | 8.1 |
| Explosion pressure/ reaction time | 0.128 | 0.131 | 0.130 | 0.176 | 0.196 | 0.183 |

Referring to FIGS. 3 to 8 below and Table 2 above, it can be confirmed that the lithium secondary batteries of Examples, in which LATP was employed in the positive electrode and a gel-type electrolyte was employed according to the present disclosure, showed the most superior values in terms of explosion pressure and reaction time, with an explosion pressure of 1.29 bar and a reaction time of 10.1 s, and Comparative Example 1 showed the explosion pressure of 1.46 bar and the reaction time of 8.3 s, so that the explosion pressure of Example 1 decreased by 11.6% and the reaction time increased by 21.7% compared to Comparative Example 1. When this was converted to explosion pressure per reaction time, it can be confirmed that Example 1 showed 0.128 bar/sec and Comparative Example 1 showed 0.176 bar/sec, which shows a difference of 27.4%.

Similarly, it can be confirmed that Comparative Example 2, which does not use a gel-type electrolyte, and Comparative Example 3, which does not use LATP in the positive electrode, also show results similar to those of Comparative Example 1.

<Experimental Example 3>

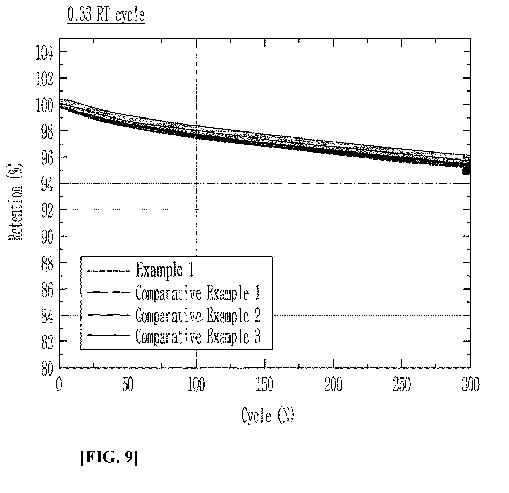

The lithium secondary batteries of Example 1 and Comparative Examples 1 to 3 were charged with CC-CV at 25°C under the conditions of 0.33C and 4.2V, and discharged with CC at 0.33C. The entire process was repeated 300 cycles, and the 1-cycle discharge capacity was set to 100% to calculate the discharge capacity retention at 300 cycles. The results are shown in Table 3 and FIG. 9 below.

In addition, the DC resistance of the lithium secondary batteries of Examples 1 to 3 and Comparative Examples 1 to 4 was measured by the HPPC (Hybrid pulse power characterization) method, and the results are shown in Table 3 below.

For the measurement of the DC resistance, the lithium secondary batteries were charged with CC/CV under a condition of 0.33C, 4.2V, 0.05C cut-off, discharged with CC under a condition of 0.33C, 2.5V cut-off, and the capacity of the batteries was confirmed. Then, fully charged lithium secondary batteries were discharged to 50% capacity under the same charging conditions to set the SOC to 50, and then the DC resistance was measured at the corresponding SOC through a 2.5C, 10-second discharge.

[Table 3]

| | Example 1 | Example 2 | Example 3 | Comparative Example 1 | Comparative Example 2 | Comparative Example 3 | Comparative Example 4 |
|---|---|---|---|---|---|---|---|
| Cell resistance (mohm) | 1.86 | 2.05 | 1.88 | 1.88 | 1.80 | 1.98 | 1.90 |
| Capacity retention (%) | 95.5 | | | 95.5 | 95.7 | 95.7 | |

Referring to Table 3, it can be confirmed that the resistance of Example 1 and Comparative Example 2, in which LATP was added, appears to be relatively low. In this case, it can be confirmed that the resistance of the lithium secondary battery decreases by about 2 to 3% compared to the case where LATP was not added. However, it can be confirmed from Example 1 and Comparative Example 4 that when the LATP content is 3 wt.%, the resistance rather increases.

On the other hand, since the capacity retention is similar, it can be seen that there is no degradation in the performance of other lithium secondary batteries according to the present disclosure.

Based on the above disclosure, various applications and modifications can be carried out by those of ordinary skill in the art without deviating from the spirit and scope of the present disclosure.

**[Industrial Applicability]**

In the lithium secondary battery according to the present disclosure, the inorganic solid electrolyte is not only uniformly distributed within the positive electrode, but is also included in a predetermined amount or more. Thus, the lithium secondary battery covers the surface of the positive electrode active material by 50% or more, and further gels the electrolyte, thereby delaying the ignition of the lithium secondary battery, lowering the explosion pressure, increasing the reaction time, and reducing the explosion power. Therefore, it is possible to exert the effect of improving the safety of the lithium secondary battery.

Furthermore, in the lithium secondary battery of the present disclosure, the inorganic solid electrolyte can be uniformly distributed in the thickness direction even at high loading, which is effective in ensuring the safety of the lithium secondary battery even at high loading.

**Claims**

1. A lithium secondary battery comprising:

   a positive electrode in which a positive electrode mixture layer containing a positive electrode active material and an inorganic solid electrolyte is formed on one side or both sides of a positive electrode current collector,
   a negative electrode in which a negative electrode mixture layer containing a negative electrode active material is formed on one side or both sides of a negative electrode current collector,
   a separator interposed between the positive electrode and the negative electrode, and
   a gel-type electrolyte,
   wherein the inorganic solid electrolyte is included in an amount of 0.5 wt.% to 2 wt.% based on the total weight of the positive electrode mixture layer, and is uniformly distributed within the positive electrode mixture layer.

2. The lithium secondary battery according to claim 1,
   wherein when the positive electrode mixture layer is divided in half based on the thickness direction, the inorganic solid electrolyte is included in an amount of 40 to 60 wt.% in the upper layer and in an amount of 40 to 60 wt.% in the lower layer, based on the total weight of the inorganic solid electrolyte.

3. The lithium secondary battery according to claim 2,
   wherein when the upper layer and the lower layer are each divided in half based on the thickness direction, the inorganic solid electrolyte is included in an amount of 20 to 30 wt.% in each layer based on the total weight of the inorganic solid electrolyte.

4. The lithium secondary battery according to claim 1,

wherein 50% to 90% of the total surface area of the positive electrode active material is covered by the inorganic solid electrolyte.

5.  The lithium secondary battery according to claim 1,
    wherein the inorganic solid electrolyte is an oxide-based solid electrolyte having a NASICON structure.

6.  The lithium secondary battery according to claim 1,

    wherein the inorganic solid electrolyte is an oxide-based solid electrolyte represented by the following Chemical Formula 1:.

    [Chemical Formula 1]   $Li_{1+x}M'_{2-x}M_x(PO_4)_3$

    in Chemical Formula 1,

    $$0<x<2,$$

    M' is at least one selected from the group consisting of Ti, Zr, Ge, Sn, and Hf, and
    M is at least one selected from the group consisting of Cr, Al, Mg, Ga, Sc, Y, In, and La.

7.  The lithium secondary battery according to claim 6,
    wherein the oxide-based solid electrolyte is a lithium aluminum titanium phosphate(LATP) compound in which M' is Ti, and M is Al.

8.  The lithium secondary battery according to claim 1,
    wherein the loading amount of the positive electrode mixture layer is 400 mg/25 cm$^2$ to 600 mg/25 cm$^2$.

9.  The lithium secondary battery according to claim 1,

    wherein the gel-type electrolyte comprises,
    i) a lithium salt, ii) a non-aqueous organic solvent, and
    iii) at least one polymerizable compound selected from the group consisting of polymerizable monomers, oligomers, and copolymers having polymerizable unsaturated functional groups,
    wherein at least a part of the polymerizable unsaturated functional groups is cured.

10. The lithium secondary battery according to claim 9,
    wherein the polymerizable unsaturated functional group is at least one selected from the group consisting of a vinyl group, an epoxy group, an allyl group, and a (meth)acrylic group.

11. The lithium secondary battery according to claim 9,
    wherein the non-aqueous organic solvent is a carbonate-based organic solvent.

12. The lithium secondary battery according to claim 9,
    wherein the gel-type electrolyte further comprises a polymerization initiator, and the polymerization initiator is a photoinitiator or a thermal initiator.

13. The lithium secondary battery according to claim 12,
    wherein the polymerization initiator is included in an amount of 0.01 to 20 parts by weight based on 100 parts by weight of the polymerizable compound.

14. The lithium secondary battery according to claim 9,
    wherein the gel-type electrolyte further comprises a functional additive, and the functional additive is at least one selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

[FIG. 1]

[FIG. 2]

[FIG. 3]

Example 1

[FIG. 4]

Example 2

EP 4 668 404 A1

[FIG. 5]

Example 3

[FIG. 6]

Comparative Example 1

[FIG. 7]

Comparative Example 2

[FIG. 8]

Comparative Example 3

<u>0.33 RT cycle</u>

[FIG. 9]

## INTERNATIONAL SEARCH REPORT

| International application No. |
| --- |
| **PCT/KR2024/020471** |

| A. | CLASSIFICATION OF SUBJECT MATTER |
| --- | --- |

**H01M 10/058**(2010.01)i; **H01M 10/0565**(2010.01)i; **H01M 10/0562**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 10/058(2010.01); H01M 10/052(2010.01); H01M 10/0565(2010.01); H01M 10/36(2006.01); H01M 4/02(2006.01); H01M 4/13(2010.01); H01M 4/139(2010.01); H01M 4/36(2006.01); H01M 50/434(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무기계 고체 전해질(inorganic solid electrolyte), 양극 합제층(anode composite layer), 음극 합제층(cathode composite layer), 겔형 전해질(gel-type electrolyte), 리튬 이차 전지(lithium secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0024918 A (BEIJING WELION NEW ENERGY TECHNOLOGY CO., LTD.) 21 February 2023 (2023-02-21)<br>See paragraphs [0060]-[0192]. | 1-14 |
| Y | KR 10-2022-0038006 A (LG ENERGY SOLUTION, LTD.) 25 March 2022 (2022-03-25)<br>See paragraph [0133] and claims 1, 5 and 8. | 1-14 |
| A | KR 10-2014-0033934 A (LG CHEM, LTD.) 19 March 2014 (2014-03-19)<br>See paragraphs [0020]-[0021] and claims 1-2 and 5. | 1-14 |
| A | JP 2008-277170 A (OHARA INC.) 13 November 2008 (2008-11-13)<br>See claim 1. | 1-14 |
| A | JP 2014-175278 A (HITACHI MAXELL LTD.) 22 September 2014 (2014-09-22)<br>See paragraph [0026] and claim 8. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 March 2025** | **21 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020471**

| Patent document cited in search report | | | Publication date (day/month/year) | Patent family member(s) | | | Publication date (day/month/year) |
|---|---|---|---|---|---|---|---|
| KR | 10-2023-0024918 | A | 21 February 2023 | CN | 111447245 | A | 24 July 2020 |
| | | | | CN | 111516476 | A | 11 August 2020 |
| | | | | CN | 111516476 | B | 17 December 2024 |
| | | | | CN | 112102895 | A | 18 December 2020 |
| | | | | CN | 112102895 | B | 26 January 2024 |
| | | | | CN | 113742789 | A | 03 December 2021 |
| | | | | CN | 113742789 | B | 21 June 2024 |
| | | | | CN | 113744114 | A | 03 December 2021 |
| | | | | CN | 113744114 | B | 12 November 2024 |
| | | | | CN | 113745455 | A | 03 December 2021 |
| | | | | CN | 113745456 | A | 03 December 2021 |
| | | | | CN | 113745456 | B | 22 August 2023 |
| | | | | CN | 113745457 | A | 03 December 2021 |
| | | | | CN | 113745457 | B | 28 July 2023 |
| | | | | CN | 117117118 | A | 24 November 2023 |
| | | | | CN | 212447084 | U | 02 February 2021 |
| | | | | DE | 112021003000 | T5 | 23 March 2023 |
| | | | | EP | 4156010 | A1 | 29 March 2023 |
| | | | | EP | 4159504 | A1 | 05 April 2023 |
| | | | | EP | 4161012 | A1 | 05 April 2023 |
| | | | | JP | 2022-537611 | A | 29 August 2022 |
| | | | | JP | 2023-527035 | A | 26 June 2023 |
| | | | | JP | 7234366 | B2 | 07 March 2023 |
| | | | | JP | 7577761 | B2 | 05 November 2024 |
| | | | | KR | 10-2516383 | B1 | 31 March 2023 |
| | | | | US | 11891119 | B2 | 06 February 2024 |
| | | | | US | 12096151 | B2 | 17 September 2024 |
| | | | | US | 2022-0315107 | A1 | 06 October 2022 |
| | | | | US | 2023-0087911 | A1 | 23 March 2023 |
| | | | | US | 2023-0216023 | A1 | 06 July 2023 |
| | | | | US | 2024-0116571 | A1 | 11 April 2024 |
| | | | | US | 2024-0406340 | A1 | 05 December 2024 |
| | | | | WO | 2021-237937 | A1 | 02 December 2021 |
| | | | | WO | 2021-238218 | A1 | 02 December 2021 |
| | | | | WO | 2021-238294 | A1 | 02 December 2021 |
| | | | | WO | 2021-238939 | A1 | 02 December 2021 |
| | | | | WO | 2021-238953 | A1 | 02 December 2021 |
| | | | | WO | 2021-238979 | A1 | 02 December 2021 |
| | | | | WO | 2021-238990 | A1 | 02 December 2021 |
| KR | 10-2022-0038006 | A | 25 March 2022 | CN | 115917823 | A | 04 April 2023 |
| | | | | EP | 4191726 | A1 | 07 June 2023 |
| | | | | US | 2023-0261260 | A1 | 17 August 2023 |
| | | | | WO | 2022-060184 | A1 | 24 March 2022 |
| KR | 10-2014-0033934 | A | 19 March 2014 | None | | | |
| JP | 2008-277170 | A | 13 November 2008 | JP | 5226967 | B2 | 03 July 2013 |
| | | | | US | 2008-0268348 | A1 | 30 October 2008 |
| | | | | US | 8822077 | B2 | 02 September 2014 |
| JP | 2014-175278 | A | 22 September 2014 | JP | 6077345 | B2 | 08 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230187350

- KR 1020240184498